(19)

Europäisches
Patentamt
European
Patent Office
Office européen
des brevets

(11)     **EP 2 082 871 A1**

(12)     **EUROPEAN PATENT APPLICATION**

(43) Date of publication:
   **29.07.2009   Bulletin 2009/31**

(51) Int Cl.:
   **B32B 27/28** (2006.01)     **B32B 27/34** (2006.01)
   **B32B 1/08** (2006.01)     **F16L 11/04** (2006.01)

(21) Application number: **08022418.1**

(22) Date of filing: **23.12.2008**

(84) Designated Contracting States:
   **AT BE BG CH CY CZ DE DK EE ES FI FR GB GR HR HU IE IS IT LI LT LU LV MC MT NL NO PL PT RO SE SI SK TR**
   Designated Extension States:
   **AL BA MK RS**

(30) Priority:  **28.12.2007   JP 2007338690**

(71) Applicants:
   • **National University Corporation Tohoku University**
     **Sendai-shi**
     **Miyagi 980-8577 (JP)**
   • **Nichias Corporation**
     **Tokyo 105-8555 (JP)**
   • **Stella Chemifa Corporation**
     **Osaka-shi, Osaka 541-0047 (JP)**
   • **Ube Industries, Ltd.**
     **Ube-shi**
     **Yamaguchi 755-8633 (JP)**

(72) Inventors:
   • **Ohmi, Tadahiro**
      **c/o National University Corporation**
     **Sendai-shi**
     **Miyagi 980-8577 (JP)**

   • **Teramoto, Akinobu**
      **c/o National University Corporation**
     **Sendai-shi**
     **Miyagi 980-8577 (JP)**
   • **Fushimi, Keita**
      **c/o National University Corporation**
     **Sendai-shi**
     **Miyagi 980-8577 (JP)**
   • **Yamanaka, Jiro**
      **c/o NICHIAS Corporation**
     **Kanagawa (JP)**
   • **Miyashita, Masayuki**
      **c/o STELLA CHEMIFA CORPORATION**
     **Osaka 950-0982 (JP)**
   • **Nishioka, Tomoharu c/o UBE INDUSTRIES, LTD.,**
     **Yamaguchi 755-8633 (JP)**

(74) Representative: **Glawe, Delfs, Moll**
     **Patent- und Rechtsanwälte**
     **Postfach 26 01 62**
     **80058 München (DE)**

(54)   **Resin pipe**

(57)     A resin pipe has an inner layer made of a fluoresin, an intermediate layer of nylon, and an outermost layer made of a fluororesin and covering the intermediate layer.

FIG . I

**EP 2 082 871 A1**

**Description**

This application is based upon and claims the benefit of priority from Japanese patent application No. 2007-338690, filed on December 28, 2007, the disclosure of which is incorporated herein in its entirety by reference.

Background of the Invention:

This invention relates to a resin pipe for use not only in a transport line for a liquid such as ultrapure water (UPW) or a chemical solution but also in a severe environment exposed to a chemical solution such as hydrofluoric acid.

Generally, on manufacturing semiconductor devices, liquid crystal display devices, or the like, ultrapure water (UPW) (including ultrapure water containing hydrogen or ozone, i.e. so-called hydrogen water or ozone water) is often transported and supplied through resin pipes in addition to various chemical solutions and so on. Ultrapure water is used in various processes on manufacturing semiconductor devices or the like. This is because, if water used in a cleaning process or the like contains a large amount of oxygen in the form of dissolved oxygen, a natural oxide film is formed due to the dissolved oxygen. Recently, however, it has been pointed out that, even if ultrapure water is used, a natural oxide film is likewise formed. Therefore, it has been attempted to thoroughly remove oxygen, particles, and metal components contained in ultrapure water.

For example, on fabricating a semiconductor device using a silicon substrate, a natural oxide (SiOx) film is formed on a silicon surface if oxygen and water coexist. Particularly, it has been pointed out that, if oxygen is contained in an aqueous solution, the silicon surface is oxidized and etched, resulting in an increase in surface microroughness.

In recent years, attention has been paid to the use of a (110) crystal surface of silicon because of a larger current-driving capability for a PMOSFET as compared with a (100) crystal surface of silicon. However, the (110) crystal surface of silicon is etched more severely or quickly in an aqueous solution containing oxygen, as compared with the (100) crystal surface of silicon. Accordingly, it is necessary to prevent oxygen from being mixed into the aqueous solution when the silicon surface is cleaned by wet cleaning using the aqueous solution.

Japanese Unexamined Patent Application Publication (JP-A) No. 2006-112507 (Patent Document 1) discloses, as a pipe for use in a semiconductor manufacturing apparatus, a liquid crystal manufacturing apparatus, or the like, a fluororesin double tube comprising two kinds of fluororesin layers laminated to each other. The fluororesin double tube disclosed in Patent Document 1 comprises an inner layer tube and an outer layer tube. The inner layer tube is made of a fluororesin excellent in corrosion resistance and chemical resistance (e.g. a tetrafluoroethylene-perfluoroalkylvinylether copolymer (PFA), a tetrafluoroethylene-hexafluoropropylene copolymer (FEP), or a tetrafluoroethylene-ethylene copolymer (ETFE)). On the other hand, the outer layer tube is made of a fluororesin capable of suppressing permeation or transmission of gas (e.g. polyvinylidene fluoride (PVDF)). The inner layer tube and the outer layer tube are fusion-bonded together.

The fluororesin double tube disclosed in Patent Document 1 is excellent in corrosion resistance, chemical resistance, and gas impermeability. Further, the inner layer tube and the outer layer tube can be firmly joined together.

In Japanese Unexamined Patent Application Publication No. 2007-292292 (Patent Document 2) corresp. to US 2007-231523 A1, the present inventors previously proposed a resin pipe comprising an inner layer of PFA and an outer layer of nylon.

Summary of the Invention:

Patent Document 1 discloses the fluororesin double tube in which the peel strength between the inner layer tube and the outer layer tube is 3.0 N/m or more. Further, Patent Document 1 defines an oxygen permeability and an oxygen permeability coefficient and points out that the oxygen permeability and the oxygen permeability coefficient can be reduced.

Patent Document 1 describes that the fluororesin double tube having a PFA layer and a PVDF layer as the inner layer tube and the outer layer tube, respectively, exhibits an oxygen permeability coefficient of 0.135 and 0.025 (grams•mil/100in$^2$•24hr•atm) when hydrophilic treatment is not applied and is applied between these layers, respectively.

However, the fluororesin double tube comprising the PVDF tube as the outer layer tube as disclosed in Patent Document 1 is disadvantageous in the following respect. Because PVDF has no flexibility, the fluororesin double tube is not suitable for use as a pipe bent into various shapes although it is suitable as a straight pipe.

On the other hand, Patent Document 2 discloses the resin pipe having an oxygen permeability, an oxygen permeability coefficient, and flexibility which are required in a semiconductor manufacturing apparatus, a liquid crystal manufacturing apparatus, and the like. The resin pipe is suitable for use in a liquid transport line for a liquid such as ultrapure water (UPW) or a chemical solution. It is noted here that, in the semiconductor manufacturing apparatus, the liquid crystal manufacturing apparatus, and the like, the liquid transport line constructed by a resin pipe may be placed in an environment exposed to a chemical solution such as hydrofluoric acid. The resin pipe disclosed in Patent Document 2 is disadvantageous in that, if it is used in such an environment, nylon forming the outer layer is not resistant against some sort of chemical such as hydrofluoric acid and may be eluted out depending on the chemical.

It is an object of this invention to provide a resin pipe which can be used in an environment exposed to various chemicals.

It is another object of this invention to provide a resin pipe which has an oxygen permeability, an oxygen permeability coefficient, and flexibility required in a semiconductor manufacturing apparatus, a liquid crystal manufacturing apparatus, and the like and which has a corrosion resistance also.

It is sill another object of this invention to provide a resin pipe which is capable of maintaining an oxygen permeability coefficient not greater than $5 \times 10^6$ (molecules•cm / cm$^2$•sec•Pa) so as to achieve a dissolved oxygen amount of 10 ppb or less.

According to an aspect of this invention, there is provided a resin pipe comprising an inner layer made of a fluororesin, an intermediate layer formed on the inner layer and made of nylon, and an outermost layer formed on the intermediate layer and made of a fluororesin.

In the above-mentioned resin pipe, the fluororesin of the inner layer may be the same as that of the outermost layer.

In the above-mentioned resin pipe, the fluororesin forming the inner layer and the outermost layer may be a tetrafluoroethylene-perfluoro-alkylvinylether copolymer resin (PFA).

In the above-mentioned resin pipe, the nylon forming the intermediate layer may be nylon 6.

In the above-mentioned resin pipe, the nylon forming the intermediate layer may be a copolymer of nylon 6 and nylon 12.

In the above-mentioned resin pipe, the inner layer and the intermediate layer may be adhered to each other by an adhesive layer.

In the above-mentioned resin pipe, the adhesive layer may comprise a fluorine-based adhesive layer.

In the above-mentioned resin pipe, the fluororesin forming the outermost layer may directly cover the intermediate layer of nylon without using an adhesive.

The resin pipe according to this invention is advantageous in that a pipe material is not eluted outward even in a severe environment exposed to hydrofluoric acid or the like and that no influence is given to a liquid, such as ultrapure water, transported inside. That is, the resin pipe according to this invention is adapted to suppress permeation of a chemical solution, such as hydrofluoric acid, present in the environment and to suppress permeation of the liquid inside the resin pipe to the outside of the resin pipe.

Brief Description of the Drawing:

Fig. 1 is a sectional view for describing a resin pipe according to one embodiment of this invention;

Fig. 2 is a view for describing a method of manufacturing the resin pipe illustrated in Fig. 1; and

Fig. 3 is a view for describing a measurement system for measuring properties of a resin pipe according to this invention.

Description of the Exemplary Embodiment:

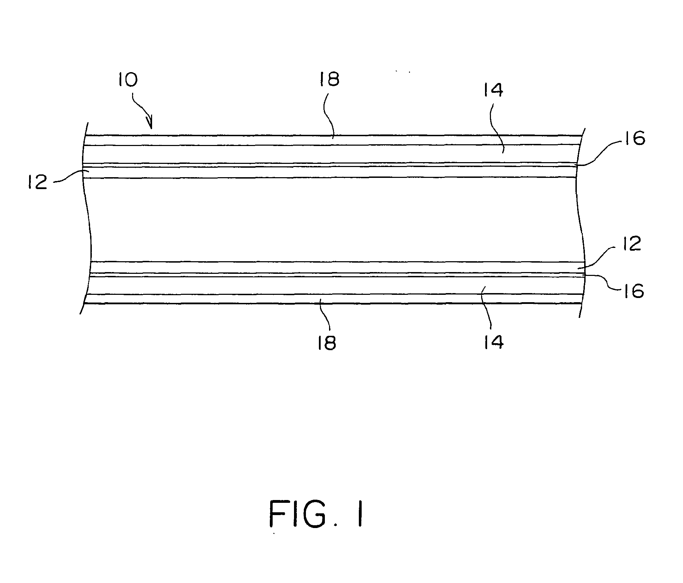

Referring to Fig. 1, a resin pipe 10 according to one embodiment of this invention has a four-layer structure. The resin pipe 10 illustrated in the figure comprises an inner layer 12 made of a fluororesin, an intermediate layer 14 made of nylon, an adhesive layer 16 interposed between the inner layer 12 and the intermediate layer 14, and an outermost layer 18 made of a fluororesin.

It is desired that the fluororesin forming the inner layer 12 of the resin pipe 10 is PFA (a tetrafluoroethylene-perfluoroalkylvinylether copolymer) and that the fluororesin forming the outermost layer 18 is PFA also. Nylon forming the intermediate layer 14 is desirably nylon 6 or a copolymer of nylon 6 and nylon 12. In addition, the adhesive layer 16 is preferably formed by a fluorine-based adhesive.

As a specific example, the resin pipe 10 comprises the inner layer 12 made of PFA and having a thickness of 0.2 mm, the adhesive layer 16 made of the fluorine-based adhesive and having a thickness of 0.1 mm, the intermediate layer 14 made of nylon and having a thickness of 0.7 mm, and the outermost layer 18 made of PFA and having a thickness of 0.1 mm.

Thus, the inner layer 12 is made of PFA which is inactive against ultrapure water, various chemical solutions, and various gases and excellent in durability. On the other hand, the outermost layer 18 is made of PFA also. With this structure, even if the resin pipe 10 is placed in a severe environment exposed to a chemical solution such as hydrofluoric acid, the outermost layer 18 is not eroded by the chemical solution and the inner layer 12 is not eroded by a chemical solution transported inside.

The intermediate layer 14 of nylon is adhered onto the inner layer 12 of PFA by means of the adhesive layer 16. This makes it possible to reduce an oxygen permeability and an oxygen permeability coefficient for oxygen transmitted from the outside into the resin tube 10.

In the illustrated example, the outermost layer 18 of PFA directly covers the intermediate layer 14 without using an adhesive.

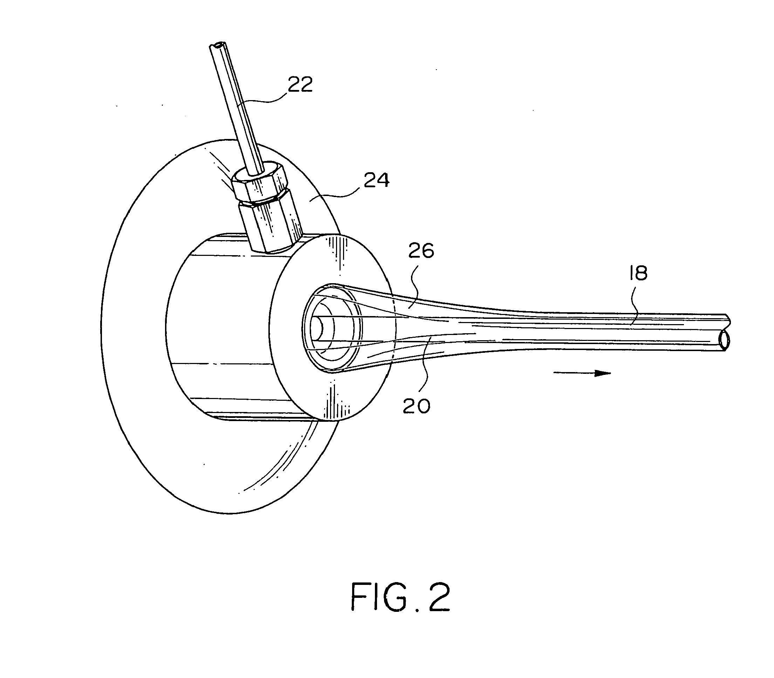

Referring to Fig. 2, description will be made of a method of manufacturing the resin pipe 10 of a four-layer structure illustrated in Fig. 1. It is assumed here that a resin tube 20 of a three-layer structure comprising the inner layer 12, the adhesive layer 16, and the intermediate layer 14 is already manufactured by using an ordinary technique. The three-layer resin tube 20 is fed from a rear part of a crosshead die 22 illustrated in Fig. 2 and pulled forward in a feeding direction depicted by an arrow (i.e., rightward) in the figure.

On the other hand, the crosshead die 22 is supplied with a fluororesin (herein, PFA) which is extruded through a nozzle 24 in a direction perpendicular to the feeding direction to produce a PFA tube 26. The PFA tube 26 formed by extrusion is pulled out in the feeding direction together with the resin tube 20. Thus, the resin tube 20 is coated with a PFA layer. As a result, the resin tube 10 of a four-layer structure comprising the outermost layer 18 illustrated in Fig. 1 is obtained.

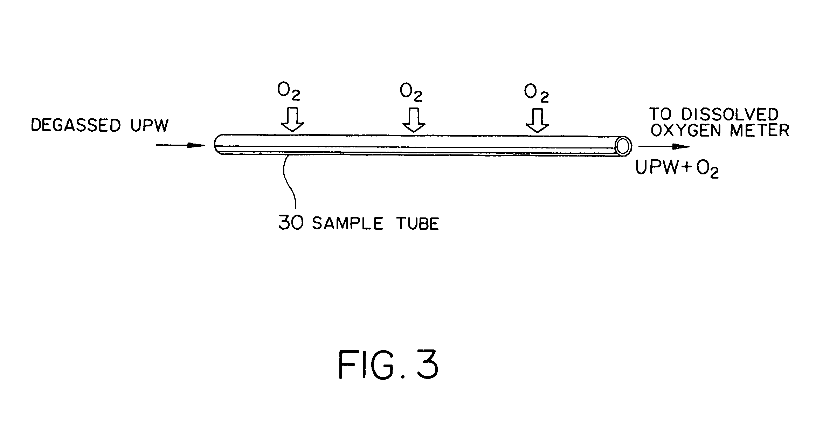

Next referring to Fig. 3, description will be made of a measurement system for measuring a permeability coefficient of a resin tube according to this invention. As shown in Fig. 3, a resin tube of a four-layer structure as a sample tube 30 is supplied with ultrapure water (UPW) (degassed UPW) through a degassing filter (not shown). In the illustrated measurement system, permeation of gas into the sample tube 30 is proportional to a contact area and a contact time between the gas and the sample tube 30, a pressure, and a temperature and is inversely proportional to a thickness of the sample tube 30. Therefore, the permeability coefficient (the permeability per unit time, unit pressure, and unit thickness) is calculated by the following formula (1).

$$\text{Permeability Coefficient (molecules} \cdot \text{cm)} / (\text{cm}^2 \cdot \text{sec} \cdot \text{Pa})$$

$$= (\text{Amount of Permeated Substance} \times \text{Thickness of Sample}) /$$

$$(\text{Area of Sample} \times \text{Contact Time} \times \text{Pressure Difference}) \qquad (1)$$

Herein, the pressure difference is a difference in pressure of the permeated substance on opposite sides of the sample.

As a result of measurement using the measurement system illustrated in Fig. 3, it has been found that the resin pipe of a four-layer structure according to this invention has an oxygen permeability coefficient ($1.3 \times 10^5$ (molecules·cm) / (cm$^2$·sec·Pa)) which is equivalent to that of a resin pipe of a three-layer structure without the outermost layer. It has also been found that a dissolved oxygen concentration after lapse of 24 hours is 0.6 ppb or less.

In the foregoing embodiment, description has been made of a tube comprising a combination of nylon and PFA. However, it is possible to combine nylon or PVDF with a different kind of fluororesin, for example, ETFE, PTFE, PVDC, or FEP. In this case, a material resistant against an alkaline aqueous solution, an acidic aqueous solution, a neutral aqueous solution, or an organic solvent is preferably used as the inner layer.

The resin tube according to this invention is applicable not only to a pipe between containers but also to various pipes which are used in a semiconductor manufacturing apparatus, a liquid crystal manufacturing apparatus, or the like and which are placed in an environment exposed to a chemical solution. The pipes may not always be restricted to the chemical solution supply pipe and the ultrapure water transport pipe but may be applied to any other pipes used in the semiconductor manufacturing apparatus and the like.

While this invention has thus far been described in connection with the exemplary embodiment thereof, it will readily be possible for those skilled in the art to put this invention into practice in various other manners.

**Claims**

1.  A resin pipe comprising an inner layer made of a fluororesin, an intermediate layer formed on the inner layer and made of nylon, and an outermost layer formed on the intermediate layer and made of a fluororesin.

2.  The resin pipe according to claim 1, wherein the fluororesin of the inner layer is the same as that of the outermost layer.

3. The resin pipe according to claim 2, wherein the fluororesin forming the inner layer and the outermost layer is a tetrafluoroethylene-perfluoroalkylvinylether copolymer resin (PFA).

4. The resin pipe according to any one of claims 1 to 3, wherein the nylon forming the intermediate layer is nylon 6.

5. The resin pipe according to any one of claims 1 to 3, wherein the nylon forming the intermediate layer is a copolymer of nylon 6 and nylon 12.

6. The resin pipe according to any one of claims 1 to 5, wherein the inner layer and the intermediate layer are adhered to each other by an adhesive layer.

7. The resin pipe according to claim 6, wherein the adhesive layer comprises a fluorine-based adhesive layer.

8. The resin pipe according to any one of claims 1 to 6, wherein the fluororesin forming the outermost layer directly covers the intermediate layer of nylon without using an adhesive.

FIG. 1

FIG. 2

FIG. 3

Europäisches
Patentamt

European
Patent Office

Office européen
des brevets

# EUROPEAN SEARCH REPORT

**Application Number**

EP 08 02 2418

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/06376 A (DYNEON LLC [US]) 10 February 2000 (2000-02-10) * claims 1,8,9 * * page 2, line 1 - line 8 * * page 8, line 25 - page 9, line 8 * * page 8, line 30 * * page 9, line 1 - line 2 * ----- | 1,4,5 | INV. B32B27/28 B32B27/34 B32B1/08 F16L11/04 |
| X | WO 02/076734 A (PARKER HANNIFIN CORP [US]) 3 October 2002 (2002-10-03) * claims 1,13 * * page 1, line 2 - line 6 * * page 4, line 22 - page 5, line 8 * ----- | 1 | |

|  |  |
|---|---|
|  | TECHNICAL FIELDS SEARCHED (IPC) |
|  | B32B F16L |

The present search report has been drawn up for all claims

| Place of search | Date of completion of the search | Examiner |
|---|---|---|
| The Hague | 30 March 2009 | Hillebrand, Gerhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 02 2418

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2009

| Patent document cited in search report | | Publication date | Patent family member(s) | | Publication date |
|---|---|---|---|---|---|
| WO 0006376 | A | 10-02-2000 | BR | 9912619 A | 24-04-2001 |
| | | | CA | 2337498 A1 | 10-02-2000 |
| | | | EP | 1117531 A1 | 25-07-2001 |
| | | | JP | 2002521239 T | 16-07-2002 |
| WO 02076734 | A | 03-10-2002 | AT | 336370 T | 15-09-2006 |
| | | | BR | 8203366 U | 02-03-2004 |
| | | | CA | 2441976 A1 | 03-10-2002 |
| | | | DE | 60213962 T2 | 30-08-2007 |
| | | | DK | 1383650 T3 | 27-12-2006 |
| | | | EP | 1383650 A1 | 28-01-2004 |
| | | | MX | PA03008580 A | 08-12-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007338690 A
- JP 2006112507 A
- JP 2007292292 A
- US 2007231523 A1